# EUROPÄISCHE PATENTSCHRIFT

(11) **EP 1 720 811 B1**
(45) Veröffentlichungstag und Bekanntmachung des Hinweises auf die Patenterteilung: **30.10.2013**
(21) Anmeldenummer: 05715841.2
(22) Anmeldetag: 08.03.2005
(51) Int. Cl.: C04B 28/02, C04B 24/26

(54) **VERFAHREN ZUR HERSTELLUNG EINES HYDRAULISCH ERHÄRTENDEN VERBUNDWERKSTOFFS**
METHOD FOR PRODUCING A HYDRAULICALLY CURING COMPOSITE MATERIAL
PROCEDE POUR PRODUIRE UN MATERIAU COMPOSITE A PRISE HYDRAULIQUE

(30) Priorität: 08.03.2004 DE 102004011140
(43) Veröffentlichungstag der Anmeldung: 15.11.2006
(73) Patentinhaber: Zinke, Bernhard, 03044 Cottbus (DE)
(72) Erfinder: Zinke, Bernhard, 03044 Cottbus (DE)
(74) Vertreter: Zeitler - Volpert - Kandlbinder
(86) Internationale Anmeldenummer: PCT/EP2005/002445
(87) Internationale Veröffentlichungsnummer: WO 2005/085152

(56) Entgegenhaltungen:
- WO-A-02/066395
- US-A- 5 534 058

## Beschreibung

Die Erfindung betrifft ein Verfahren zur Herstellung eines hydraulisch erhärtenden Verbundwerkstoffes.

Hydraulisch erhärtende bekannte Verbundwerkstoffe (Compounds) liegen in Form von Baustoff- oder Bindemittelmischungen vor und können bestehen aus Zementen, Spezialzementen, Klebern, z.B. Fliesenklebern, Gasbetonklebern usw., Ausgleichsmassen, Estrichmassen, Saniermassen, Verbund- und Spachtelmassen, Spezialschlämmen, Abdichtungsmassen usw.

Derartige Verbundwerkstoffe besitzen ein weites Einsatzspektrum. Gleichzeitig weisen sie jedoch vielfältige Nachteile auf. Diese bestehen z.B. darin, dass sie nicht spannungsfrei aushärten, so dass sie ein gestörtes inhomogenes Gefüge besitzen, dass ihr Einsatz sowohl bei kalter als auch bei warmer Witterung eingeschränkt ist, dass sie nach ihrer Aushärtung entweder nur eine hohe Wärmedämmung oder nur eine vernachlässigbare Wasserdurchlässigkeit, jedoch diese erstrebenswerte Effekte nicht gleichzeitig aufweisen und dass sie schließlich an vielfältige Untergründe und Trägermaterialien nur in unzureichender Form anhaften bzw. ankleben. Schließlich ist auch ein Mehrschichtenauftrag sowie ein dübelloses Ansetzen nach längeren Verarbeitungspausen nicht möglich. Dies bedeutet mit anderen Worten, dass derartige Verbundwerkstoffe in nachteiliger Weise nur im Frischverbund angeordnet werden können.

Aus der US 5,534,058 sind Baumaterialien bekannt, die aus Flugasche hergestellt werden. Das Baumaterial wird dabei mit einem Verfahren hergestellt, bei dem etwa 70 bis etwa 85 Gew.-% Flugasche und etwa 15 bis etwa 30 Gew.-% Material auf Cellulosebasis unter Bildung einer Pulverzusammensetzung gemischt werden, eine wässrige Emulsion gebildet wird, die bis zu etwa 1 Gew.-% eines Bindemittels mit Haftwirkung umfasst, die Pulverzusammensetzung und die wässrige Emulsion unter Bildung einer Aufschlämmung gemischt werden, die Aufschlämmung in eine Form eingebracht wird, die Aufschlämmung in der Form getrocknet wird, um einen Formgegenstand zu bilden, und der Formgegenstand aus der Form entfernt wird. Als einziges Beispiel für das Bindemittel mit Haftwirkung ist dabei Polyvinylacetat genannt.

Es sind ferner spezielle Verbundwerkstoffe bzw. Baustoffverbindungen bekannt (DE 199 32 909 A1), die aus Flugasche und Zement ohne und mit Zusatz von speziellen Additiven, wie Methylzellulose, bestehen und nahezu spannungsfrei erhärten. Dies ist jedoch nur möglich aufgrund einer Zumischung von aktiven Braunkohleaschen mit quellfähigem Charakter und hoher Verdichtungswilligkeit, d.h. unter Ausschluss von Flugaschen mit dominierenden alumosilikatischem Phasenbestand und von geringverdichtungswilligen, stark quellenden Flugaschen. Derartige Verbundwerkstoffe kommen überwiegend für Abdichtungs- und Sanierungsaufgaben zur Anwendung. Hierbei zeigt sich jedoch auch bei ihnen der Nachteil, dass sie, wie alle hydraulisch erhärtenden Mischungen, witterungsbedingten Einsatzbeschränkungen unterliegen.

Der Erfindung liegt daher die Aufgabe zugrunde, zur Beseitigung der geschilderten Nachteile ein Verfahren zur Herstellung eines hydraulisch erhärtenden Verbundwerkstoffs (Compound) zu schaffen, mittels dem es möglich ist, die generell gegenüber anderen hydraulisch erhärtenden Trockenbaustoffen ausnutzbaren vorteilhaften Eigenschaften von Flugasche-Zement-Mischungen bzw. reinen Flugaschemischungen hinsichtlich ihres Einsatzspektrums zu erweitern und die Anwendersicherheit bei der Verarbeitung derartiger Verbundwerkstoffe zu erhöhen. Hierbei sollen die durch ein solches Verfahren gewonnenen Verbundwerkstoffe schnell sowie spannungsfrei hydraulisch erhärtbar und außerdem witterungsunabhängig anwendbar sein. Sie sollen sich außerdem auszeichnen durch schnelle Vorverfestigungseffekte, außerordentlich gutes Klebe- und Anhaftungsverhalten, gutes Wasserhaltevermögen für die hydraulisch ablaufenden Erhärtungsprozesse nach temporärer Vorverfestigung sowie durch Frostunempfindlichkeit während der Aushärtung.

Die Merkmale der zur Lösung dieser Aufgabe geschaffenen Erfindung ergeben sich aus Anspruch 1. Vorteilhafte Ausgestaltungen hiervon sind in den weiteren Ansprüchen angegeben.

Dem erfindungsgemäßen Verfahren liegt der wesentliche Gedanke zugrunde, der Ausgangsmischung, die eine Flugasche-Zement-Mischung ist, ein temporäres Bindemittel in Form von Polyvinylalkohol zuzugeben, worauf das aus der Ausgangsmischung, dem temporären Bindemittel und dem Anmachwasser gebildete Gemisch einem Verarbeitungsgang in Form von Mischen unterzogen wird und nach einer vorbestimmten Vorerschließungszeit (Topfzeit) einen spannungsfrei aushärtbaren Verbundwerkstoff mit gezielt erreichbarer Verarbeitungskonsistenz bildet.

Das gebildete Gemisch wird sodann erfindungsgemäß nach dem Verarbeitungsgang des Mischens einer vorbestimmten Vorerschließungszeit unterzogen, die bis zu einer Stunde dauern kann. Es ist sodann vorgesehen, das gebildete Gemisch nach der Vorerschließungszeit einem Neuaufmischen zu unterziehen.

Vorzugsweise wird das temporäre Bindemittel in Pulverform zugegeben. Hierbei liegt der zur Anwendung gelangende Polyvinylalkohol als weißes oder cremefarbiges körniges Pulver vor und kann beispielsweise handelsüblich von der Firma Celanese bezogen werden.

Bevorzugt wird das erfindungsgemäß zur Anwendung gelangende temporäre Bindemittel mit der Ausgangsmischung vermengt und das Anmachwasser erst danach zugegeben.

Hierbei liegt es im Rahmen der Erfindung, dass das temporäre Bindemittel der Ausgangsmischung in einer Menge zugegeben wird, die mindestens 5 Gew.% und maximal 20 Gew.% des später zuzugebenden Anmachwassers beträgt.

Besondere Vorteile ergeben sich dann, wenn das aus der Ausgangsmischung und dem temporären Bindemittel gebildete Trockengemisch intensiv in das Anmachwasser eingemischt werden. Stattdessen liegt es jedoch auch im Rahmen der Erfindung, dass das Anmachwasser intensiv in das aus der Ausgangsmischung und dem temporären Bindemittel gebildete Trockengemisch eingemischt wird.

Weitere Vorteile ergeben sich, wenn das Anmachwasser in erwärmtem bzw. erhitztem Zustand zugegeben wird.

Die gewünschten Eigenschaften des erzielten Verbundwerkstoffes lassen sich erfindungsgemäß dadurch steuern, dass dem Trockengemisch vor der Vermischung mit dem Anmachwasser technische Fasern zugegeben werden. Hierbei können als technische Fasern solche von kurzer Länge, beispielsweise sog. Technocell-Fasern, verwendet werden. In diesem Zusammenhang ist es von Vorteil, wenn die technischen Fasern in einer Menge zugegeben werden, die etwa 1 - 8 Gew.% des Trockengemischs beträgt.

Weitere Vorteile ergeben sich, wenn als Flugasche-Zement-Mischung eine solche mit mehr als 50 % Flugasche verwendet wird. Die verwendete Flugasche kann hierbei entweder eine kalkreiche Flugasche, d.h. deutlich basisch sein, sie kann eine kieselsäurereiche Flugasche, d.h. schwachbasisch sein oder sie kann schließlich eine alumosilikatische Flugasche, d.h. nahezu inert (neutral) sein.

Als Zement gelangt vorzugsweise hochwertiger Portlandzement der Mindestfestigkeitsklasse Cem 42,5 zur Anwendung.

Schließlich ist es auch möglich - und für Anstrichsysteme vorteilhaft -, sehr feinkörnige Flugasche-Zement-Mischungen, insbesondere mit Korngrößen kleiner 0,045 mm, zu verwenden.

Selbstverständlich ist es möglich, in Abhängigkeit von der Menge des eingesetzten Anmachwassers den Verbundwerkstoff in einer Verarbeitungskonsistenz herzustellen, die von steifplastischer über plastische bis zu weichplastischer und schließlich flüssigstreichfähiger Eigenschaft reicht.

Die mit der Erfindung erzielbare vorteilhafte und äußerst überraschende Wirkung beruht u.a. darauf, dass die hohe Feinkörnigkeit und große spezifische Oberfläche der generell adsorptiv wirkenden Flugasche in Kombination mit dem zur Anwendung gelangenden temporären Bindemittel (temporärer Vorverfestiger) und der sich nach dem Aufmischen daraus bildenden modifizierten Polymerlösung dermaßen komplex zusammenwirken, dass ein sauberes Fixieren der feinen Flugaschepartikel - und auch evtl. weiterer effektsteuernder feinkörniger bzw. feinfaseriger Zusätze, wie z.B. kurze technische Fasern - bereits beim Mischen unter Einmischen von Luft erfolgt. Dies bewirkt einen schnellen inneren sowie äußeren Verkittungs- bzw. Verklebungseffekt, was zu einem homogenen Gefüge mit Verbundwirkung nach innen und außen führt. Hierbei wird überflüssiges Wasser schnell an die Umgebungsluft ohne Volumenänderung abgegeben, und es stellt sich längerfristig eine vorteilhafte Verdunstungsgasbildung ein. Gleichzeitig wird das für die langfristige Flugasche-Zementreaktion benötigte Wasser gebunden und steht somit dosiert für optimale und nunmehr beschleunigt ablaufende hydraulische Langzeitreaktionen des spannungsfrei aushärtenden vorverfestigten Gefüges zur Verfügung.

Diese vorerwähnten kombinierten Reaktionen, die mit der Erfindung erzielt werden, wirken ferner dahingehend, dass nunmehr eine gefahrlose Anwendung des erfindungsgemäßen Verbundwerkstoffs sowohl bei hohen Temperaturen ohne die Gefahr einer Verbrennung als auch bei niedrigen Temperaturen ohne die Gefahr eines Durchfrierens mit den sich hierdurch ergebenden Gefügezerstörungen ermöglicht wird.

Insgesamt lassen sich daher mit dem erfindungsgemäßen Verfahren und dem hiermit herstellbaren hydraulisch ausgehärteten Verbundwerkstoff folgende vorteilhafte, nicht zu erwartende und damit überraschende Effekte erzielen:
a) Nach dem bevorzugt erfolgten Intensiveinmischen des aus der Ausgangsmischung und dem temporären Bindemittel gebildeten Trockengemischs in das Anmachwasser bzw. nach dem Intensiveinmischen des Anmachwassers in das Trockengemisch lässt sich ein homogener Verbundwerkstoff erzielen, dessen Eigenschaft von steifplastischer über plastischer, weichplastischer, spachtelfähiger bis zu streichfähiger Verarbeitungskonsistenz reicht und dessen Homogenität sowie Verarbeitbarkeit nach der Vorerschließungszeit (Topfzeit) bis zu einer Stunde und anschließendem Neuaufmischen in gewünschter Weise verbesserbar ist. Ein derartiger Verbundwerkstoff lässt sich für nahezu alle schwindfrei aushärtbaren Prozesse, welche eine steife bis flüssige Konsistenz benötigen, anwenden, z.B. für beliebige Spachtelmassen, Schlämme, Farben, usw. Dies beruht auf dem erzielten günstigen Elastizitätsmodul und damit dem erreichten guten Arbeitsvermögen.
b) Auch bei einer gezielt erreichbaren unterschiedlichen Verarbeitungskonsistenz des spannungsfrei aushärtbaren Verbundwerkstoffs wird aufgrund der "Klebstoffwirkung" des im Anmachwasser aufgelösten temporären Bindemittels (pulverförmiger körniger Polyvinylalkohol bzw. modifizierte pulverförmige Polymerlösung auf der Basis von Polyvinylalkohol) eine extrem gute Haftung an unterschiedlichen Materialien, beispielsweise Mineralstoffuntergrund, wie Mauerwerk, Putz, Beton, Estrich, sowie auch an Bitumen, Metall, Holz, Kunststoff, Pappe, Glas usw., erreicht.

Dadurch sind beispielsweise Sanierungen von Schlaglöchern, Ausbrüchen sowie sonstigen Mauerwerks-, Beton- und Straßenschadstellen ohne zusätzliches Ausstemmen, Ausschneiden, Freilegen usw. möglich, und zwar mit sofortiger anschließender Nutzungs- bzw. Verkehrsfreigabe.
c) Aufgrund des erfindungsgemäß verwendeten speziellen Bindemittels ergibt sich eine extrem schnelle Verfestigung und damit schnelle Nutzungsfreigabe des Verbundwerkstoffes nach seiner Verarbeitung. Dies beruht auf der temporären Vorverfestigung, so dass sich die beispielsweise mit derartigen Verbundwerkstoffen sanierten Straßenschadstellen schon nach wenigen Minuten freigeben lassen. Die erzielte temporäre Vorverfestigung läuft witterungsbedingt, sofern hohe Temperaturen und/oder windige Verhältnisse herrschen, entweder schneller ab oder dann, wenn niedrige Temperatur bzw. Windstille herrscht, langsamer ab. Hierbei kann dieser Prozess der Vorverfestigung bzw. Verfestigung durch geeignete Maßnahmen entscheidend beschleunigt werden, beispielsweise durch Verwendung von Anmachwasser in erwärmtem bzw. erhitztem Zustand und/oder durch Vorwärmen der Untergründe und/oder durch Oberflächenabtrocknung bzw. -erwärmung.
d) Der mit dem erfindungsgemäßen Verfahren hergestellte Verbundwerkstoff lässt sich auch bei extrem heißen Temperaturen, beispielsweise oberhalb von 30°C, anwenden, ohne dass zusätzliche Maßnahmen gegen vorzeitigen oder zu schnellen Wasserentzug erforderlich sind.
e) Der erfindungsgemäß hergestellte Verbundwerkstoff lässt sich auch bei extrem kalter Witterung anwenden, wobei selbst nach Durchfrieren und Auftauen der fertigen Mischungen die abschließende Erhärtung ohne wesentliche Gefügebeeinträchtigung abläuft.
f) Durch Intensivmischen des Gemischs mit hoher Bewegungsenergie der Mischwerkzeuge lassen sich, selbst bei Anwendung einer minimierten Menge von Anmachwasser, plastische Verbundwerkstoffe mit feinsten und homogen verteilten Luftporen herstellen, wobei eine Trockendichte von ca. 1 g/dm³ und weniger möglich ist. Derartige Verbundwerkstoffe lassen sich als Wärmedämm-Mischungen anwenden, wobei sie einen Wärmedämmwert aufweisen, der, bezogen auf die Dichte, im Bereich von Holz liegt und damit besser als derjenige von Porenbeton ist. Gleichzeitig weisen derartige Wärmedämm-Mischungen eine extrem geringe Wasserdurchlässigkeit auf und lassen sich somit mit Vorteil als wärmedämmende Abdichtsysteme anwenden.
g) Wenn, wie erwähnt, dem Trockengemisch kurze technische Fasern, beispielsweise sog. Technocell-Fasern, beigemischt werden, können die vorstehend unter Merkmal f) geschilderten Effekte weiter verbessert und ein Baustoff hergestellt werden, der einerseits solche vorteilhafte Eigenschaften, wie höhere Langlebigkeit und Nichtentflammbarkeit aufweist und andererseits nahezu vollständig mit Holz vergleichbar ist, und zwar hinsichtlich seiner Wasserundurchlässigkeit, seines elastisch-plastischen Verhaltens, z.B. für freimodellierbare und ohne Vorspannung herstellbare Schiffskörper, seiner Wasserspeicherung und -abgabe, z.B. für Behaglichkeitsbeschichtungen von Wand und Böden, und hinsichtlich seiner Wärmedämmung, da hiermit wärmedämmende "Spachtelholz"-Aufträge, wärmedämmende und trittangenehme "Dielungsestrich"-Aufträge usw. möglich sind.

Mit einem derartigen Baustoff lassen sich weiterhin Sanierungen und Abdichtungen von stark "arbeitenden" Bauwerken bzw. Teilbauwerken und Bauabschnitten, wie Dachkonstruktionen, Dachhäuten, Einfassungen, Fugen usw., durchführen.
h) Durch einen höheren Gehalt an Anmachwasser und einen in Abhängigkeit hiervon berechneten Gehalt an temporärem Bindemittel (Polyvinylalkohol bzw. modifizierte Polymerlösung auf der Basis von Polyvinylalkohol) im Gemisch lassen sich mit sehr feinkörnigen Flugasche-Zement-Mischungen, beispielsweise mit Korngrößen kleiner 0,045 mm, spezielle Verbundwerkstoffe herstellen, die - nach einer Erstaufmischung des Gemisches, nach einer bestimmten Topfzeit und nach abschließender Neuaufmischung - als spezielle Anstrichsysteme verwendbar sind. So lassen sich z.B. herstellen
   - entweder Fahrbahnmarkierungsfarben bzw. Wandfarben aus hell aushärtenden Flugaschen, Weißzement und ggf. weiß machenden Farbzusätzen
   - oder Rostschutzfarben aus braun aushärtender alkalischer Flugasche als Gemischkomponente, wobei das rostausschließende alkalische Anhaftmilieu mit einem pH-Wert von größer 11,8 der dünnen "Mineralhaut" den Rostvorgang verhindert.
i) Durch beliebige pulverige Wasserfarbstoffe, welche entsprechend der gewünschten Farbe und Farbintensität für das jeweilige Anwendungsgebiet der Trockenmischung homogen zugemischt werden, lassen sich unterschiedliche Farbgebungseffekte (z.B. Betonfarben, Bitumenfarben, Klinkerfarben, Sandsteinfarben, Marmorfarben, ...) für die ausgehärtete Mischung einstellen.
j) Alle ausgehärteten Mischungen besitzen ein derart homogenes Gefüge, dass sie mit spanabhebenden Werkzeugen (z.B. Feilen, Bohren, Drehen, Sägen, Fräsen), welche für die Bearbeitung der jeweils eingestellten Festigkeitsklasse optimal sind (für Holz bis Eisen), bearbeitbar sind. Hierbei sind die unter Merkmal g) charakterisierten holzähnlichen ausgehärteten Gemische auch noch schraub- und nagelbar, wobei ein "Sprödbruchverhalten" ausgeschlossen ist.
k) Bei Schichtenanwendung derartiger verarbeitungsbereiter Wasser-Compound-Mischungen kann auch nach längerfristiger Unterbrechung bei vollem Haftverbund angesetzt werden, ohne dass eine konstruktive Beeinträchtigung eintritt.

Der mit dem erfindungsgemäßen Verfahren hergestellte hydraulisch aushärtbare Verbundwerkstoff weist zahlreiche nicht vorhersehbare vorteilhafte Anwendungsmöglichkeiten auf. So wird durch das erfindungsgemäße Verfahren ein Verbundwerkstoff geschaffen, der grundsätzlich ein anorganisches Mineralstoffsystem darstellt, jedoch ganz besondere überraschende Eigenschaften aufweist. Grundsätzlich führt ja ein anorganisches Mineralstoffsystem nach der klassischen Baustofflehre zu relativ spröden und festen Systemen, weshalb über hohe Festigkeiten auch die anderen Parameter, wie Beständigkeit, Arbeitsvermögen usw., welche prinzipiell entscheidend für die Baustoffqualität sind, in gewissen Grenzen garantiert werden.

Demgegenüber stellen organische nichtmineralische Baustoffsysteme, wie Holz, Kunststoffe usw., weniger spröde, aber auch weniger feste und beständige Systeme dar, die jedoch hervorragendes Arbeitsvermögen, wie niedrigen Elastizitätsmodul und Deformationsphasen nach Überbelastung anstelle Sprödbruch, aufweisen.

Durch die Erfindung werden jedoch die vorteilhaften Eigenschaften der vorerwähnten Baustoffsysteme ohne deren Nachteile vereinigt, indem es durch das erfindungsgemäße Verfahren möglich ist, einen beständigen und langlebigen Verbundwerkstoff zu schaffen, der ohne Gefahr der Verwitterung und des organischen Zerfalls gleichzeitig die vorteilhaften Eigenschaften organischer Baustoffsysteme, wie z.B. die Eigenschaften von Holz, aufweist, also beispielsweise elastisch-plastisches Verhalten, insbesondere Verformungsverhalten, Wasserundurchlässigkeit, gute Wärmedämmung usw. Dies stellt eine nicht vorhersehbare vorteilhafte Anwendung des erfindungsgemäß hergestellten Verbundwerkstoffs dar, z.B. als "Spachtelholz".

Eine weitere, nicht vorhersehbare und vorteilhafte Anwendung des erfindungsgemäß hergestellten Verbundwerkstoffs besteht darin, daß er sowohl bei extrem hohen als auch bei extrem niedrigen Temperaturen, wie beispielsweise bei Frost, hergestellt werden kann und auch unter diesen Milieubedingungen ohne wesentliche Gefügebeeinträchtigungen aushärtet.

Die Erfindung wird im Folgenden lediglich des Beispiels halber anhand mehrerer Ausführungsformen näher erläutert:

### Ausführungsbeispiel 1:

Eine kieselsäurereiche betonfarben aushärtende Misch-Flugasche aus einem Kraftwerk der Lausitz wird mit 66 Gew.% in einem Trockengemisch, welchem ferner 30 Gew.% Cem 52,5 sowie 2 Gew.% Polyviol - Pulver (Abfallprodukt) und 2 Gew.% schwarzes Rußpulver der Firma Degussa, bezogen auf die Gesamtmischung, zugemischt werden, als Bitumenausbesserungs - Compound verwendet.

Das homogen vorgemischte Compound wird in 27 Gew.% Anmachwasser (bezogen auf das Compound) mit schnelldrehendem Rührwerkzeug zu einer dunkel aussehenden plastischen Masse verarbeitet.

Diese plastische Masse wird in eine zuvor gereinigte Bitumenschadstelle eingespachtelt.

Sind die Ausbesserungen in starker Schichtstärke vorzunehmen, wird bevorzugt ein Stützgerüst, wie z.B. Bitumensplitt, in die plastische Masse eingedrückt bzw. eingearbeitet.

Die Oberfläche wird der Umgebung rand- und höhenmäßig perfekt angepasst. Bei kalter Witterung und/oder zur schnellen Verkehrsfreigabe wird die gereinigte auszubessernde Bitumenschadstelle zuvor durch Heißluft angewärmt und/oder das Gemisch mit heißem Anmachwasser hergestellt und/oder das eingebrachte Gemisch oberflächlich mit Heißluft behandelt.

Zusätzlich kann für eine sofortige Verkehrsfreigabe nach Schadensbehandlung die Oberfläche mit Bitumenfeinsplitt abgesplittet werden.

### Ausführungsbeispiel 2:

Ein mit Dachpappe versehenes Dach weist durch Alterung und/oder Witterung partielle bzw. vollständige Schäden an der Dachhaut auf.
Mittels eines Compounds, bestehend aus den homogenisierten Komponenten
- 68 Gew.% Misch-Flugasche aus einem Braunkohlenkraftwerk des westelbischen bzw. rheinischen Reviers,
- 20 Gew.% Cem 52,5,
- 4 Gew.% Polyviol - Pulver (Abfallprodukt),
- 4 Gew.% extrem kurzfaserige technische Fasern des Typs "Technocell" und
- 4 Gew.% schwarzes Rußpulver von Degussa
wird durch intensives Einmischen in 37 Gew.% Anmachwasser (bezogen auf das Compound) mit schnelldrehendem Rührwerk eine cremige, streichfähige dachpappenfarbene Masse hergestellt. Hierbei wurde eine Topfzeit (Vorerschließungszeit) der vorgemischten Masse von 1 Stunde vor letztmaligem Wiederaufmischen eingehalten. Bei partieller Ausbesserung wird diese Masse mehrlagig auf die zuvor gesäuberten Schadstellen in ca. 5 mm Höhe auf "gesunde" Dachpappe überlappend gestrichen. Bei Komplexsanierung wird diese Masse auf das zuvor gesäuberte Dach in mindestens 5 mm Schichtstärke aufgestrichen. Die dunkel ausgehärtete Masse unterscheidet sich im Aussehen nicht wesentlich von der vorhandenen Dachhaut aus Dachpappe.

### Ausführungsbeispiel 3:

Eine mit Rostschutzfarbe versehene Dachrinne weist durch Alterung und/oder Witterung Schäden an der Farbe und am Metall auf und benötigt neuen Rostschutz sowie eine neue Farbgebung.
Mittels eines Compounds, bestehend aus den homogenisierten Komponenten
- 68 Gew.% kleiner 0,045 mm Flugaschefraktion aus einem Braunkohlenkraftwerk der Lausitz bzw. des rheinischen Reviers mit hohen, die Flugasche braunfärbenden Eisenmineralanteilen (Hämatit und andere),
- 28 Gew.% auf kleiner 0,045 mm fraktionierter Cem 52,5 und
- 4 Gew.% Polyviol - Pulver (Abfallprodukt)
wird durch intensives Einmischen in 40 Gew.% Anmachwasser (bezogen auf das Compound) mit schnelldrehendem Rührwerkzeug eine dünne, streichfähige braune Schlämme hergestellt. Hierbei wurde eine Topfzeit (Vorerschließungszeit) der vorgemischten Masse von 1 Stunde vor letztmaligem Wiederaufmischen eingehalten.

Bei vollständiger Farbdeckung wird diese Masse mindestens zweilagig auf die zuvor gesäuberte Dachrinne gestrichen, wobei der Zweitanstrich erst nach Stabilität des Erstanstriches (kein Wiederaufweichen) erfolgt.

Diese Farbgebungsaktivitäten erfolgen bevorzugt bei warmer Witterung, und zwar wegen schneller Antrocknung und demzufolge schneller Farbstabilität.

### Ausführungsbeispiel 4:

Gebäude, von denen man weiß, dass sie in Kürze durch anrückendes Hochwasser infolge Wasserdurchtritt an Fenster, Türen und sonstigen Durchlaßöffnungen in Mitleidenschaft gezogen werden, sollen durch Compounds entsprechend der erfindungsgemäßen Lösung geschützt werden. Zu diesem Zweck werden anpassungs- und verkittungsfähige Platten aus Fasergemischen, zementgebundenen Holzfasern, Holzplatten usw., welche schnell auf entsprechende Größen gebracht werden können und über längere Zeiträume ausreichend wasser- und wasserdruckstabil sind, bereitgehalten.

Mittels eines Compounds, bestehend aus den homogenisierten Komponenten
- 62 Gew.% Flugasche aus einem Braunkohlenkraftwerk der Lausitz bzw. des rheinischen Reviers mit hohem Selbstverdichtungsverhalten,
- 34 Gew.% Cem 52,5 und
- 4 Gew.% Polyviol - Pulver (Abfallprodukt)
wird durch intensives Einmischen in 32 Gew.% Anmachwasser (bezogen auf das Compound) mit schnelldrehendem Rührwerkzeug eine weichplastische Spachtelmasse hergestellt, die an den angrenzenden Flächen der potentiellen Wassereintrittsöffnungen in mindestens 5 mm Stärke aufgespachtelt wird und an die unmittelbar nach Spachtelauftrag die bereitgehaltenen, zurechtgeschnittenen Platten angedrückt (angekittet) werden. Hierbei erweist sich eine zusätzliche mechanische Befestigung bzw. Verankerung als vorteilhaft.

Anschließend können zur Erhöhung der Sicherheit die Oberflächen und Randeinfassungsflächen der die Öffnungen verschließenden Platten mit der oben angesetzten Mischung überspachtelt bzw. überstrichen werden.

## Patentansprüche

1. Verfahren zur Herstellung eines hydraulisch erhärtenden Verbundwerkstoffes mit folgenden Verfahrensschritten dahingehend,
a) - dass aus einer Flugasche - Zement - Mischung mit mehr als 50 Gew. % Flugasche als Ausgangsmaterial, einer vorgegebenen Menge Anmachwasser und einem dem Ausgangsmaterial und/oder dem Anmachwasser zugegebenen temporären Bindemittel in Form von Polyvinylalkohol eine Zusammensetzung gebildet wird,
b) - dass darauf diese Zusammensetzung einem Mischvorgang unterzogen wird,
c) - dass sodann das erzeugte Gemisch zur Bildung eines spannungsfrei aushärtbaren Verbundwerkstoffes einer vorbestimmten Vorerschließungszeit bis zu einer Stunde unterworfen wird und
d) - dass schließlich das gebildete Gemisch nach der Vorerschließungszeit einem Wiederaufmischen unterzogen wird.

2. Verfahren nach Anspruch 1, **dadurch gekennzeichnet, dass** das temporäre Bindemittel in Pulverform zugegeben wird.

3. Verfahren nach Anspruch 1 oder 2, **dadurch gekennzeichnet, dass** das temporäre Bindemittel mit dem Ausgangsmaterial vermengt und das Anmachwasser erst danach zugegeben wird.

4. Verfahren nach einem der vorhergehenden Ansprüche, **dadurch gekennzeichnet, dass** das temporäre Bindemittel dem Ausgangsmaterial in einer Menge zugegeben wird, die mindestens 5 - 20 Gew.% des später zuzugebenden Anmachwassers beträgt.

5. Verfahren nach einem der vorhergehenden Ansprüche, **dadurch gekennzeichnet, dass** das aus dem Ausgangsmaterial und dem temporären Bindemittel gebildete Trockengemisch in das Anmachwasser eingemischt wird.

6. Verfahren nach einem der Ansprüche 1 - 4, **dadurch gekennzeichnet, dass** das Anmachwasser in das aus dem Ausgangsmaterial und dem temporären Bindemittel gebildete Trockengemisch eingemischt wird.

7. Verfahren nach einem der vorhergehenden Ansprüche, **dadurch gekennzeichnet, dass** das Anmachwasser in erwärmtem oder erhitztem Zustand zugegeben wird.

8. Verfahren nach einem der vorhergehenden Ansprüche, **dadurch gekennzeichnet, dass** dem Trockengemisch vor der Vermischung mit dem Anmachwasser technische Fasern zugegeben werden.

9. Verfahren nach Anspruch 8, **dadurch gekennzeichnet, dass** die technischen Fasern in einer Menge zugegeben werden, die etwa 1 - 8 Gew.% des Trockengemischs beträgt.

10. Verfahren nach einem der vorhergehenden Ansprüche, **dadurch gekennzeichnet, dass** als Flugasche eine kalkreiche Flugasche verwendet wird.

11. Verfahren nach einem der Ansprüche 1 bis 9, **dadurch gekennzeichnet, dass** als Flugasche eine kieselsäurereiche Flugasche verwendet wird.

12. Verfahren nach einem der vorhergehenden Ansprüche, **dadurch gekennzeichnet, dass** als Zement hochwertiger Portlandzement der Mindestfestigkeitsklasse Cem 42,5 verwendet wird.

13. Verfahren nach einem der vorhergehenden Ansprüche, **dadurch gekennzeichnet, dass** eine sehr feinkörnige Flugasche-Zement-Mischung mit einer Korngröße kleiner 0,045 mm verwendet wird.

## Claims

1. Method of producing a hydraulically curing compound material, having the following steps, namely that
a) a composition is produced from a mixture of fly ash and cement containing more than 50% by weight of fly ash as a starting material, containing a preset amount of mixing water and containing a temporary binder in the form of vinyl alcohol which is added to the starting material and/or the mixing water,
b) this composition is then subjected to a mixing process,
c) the mixture produced is then subjected to a predetermined pre-curing time of up to one hour, and
d) the mixture produced is finally subjected to re-mixing after the pre-curing time.

2. Method according to claim 1, **characterised in that** the temporary binder is added in powder form.

3. Method according to claim 1 or 2, **characterised in that** the temporary binder is mixed with the starting material and only then is the mixing water added.

4. Method according to one of the preceding claims, **characterised in that** the temporary binder is added to the starting material in a quantity which is at least 5-20% by weight of the mixing water to be added later.

5. Method according to one of the preceding claims, **characterised in that** the dry mixture formed from the starting material and the temporary binder is mixed into the mixing water.

6. Method according to one of claims 1 to 4, **characterised in that** the mixing water is mixed into the dry mixture formed from the starting material and the temporary binder.

7. Method according to one of the preceding claims, **characterised in that** the mixing water is added in a warmed or heated state.

8. Method according to one of the preceding claims, **characterised in that** technical fibres are added to the dry mixture before the mixing with the mixing water.

9. Method according to claim 8, **characterised in that** the technical fibres are added in a quantity which is approximately 1 - 8% by weight of the dry mixture.

10. Method according to one of the preceding claims, **characterised in that** a lime-rich fly ash is used as the fly ash.

11. Method according to one of claims 1 to 9, **characterised in that** a fly ash rich in silicic acid is used as the fly ash.

12. Method according to one of the preceding claims, **characterised in that** high-grade Portland cement of a minimum strength class of CEM 42.5 is used as the Portland cement.

13. Method according to one of the preceding claims, **characterised in that** a very fine-grained mixture of fly ash and cement with a grain size of less than 0.045 mm is used.

## Revendications

1. Procédé pour la fabrication d'un matériau composite à prise hydraulique, comprenant les étapes de procédé suivantes consistant à :
a) à partir d'un mélange de cendres volantes et de ciment avec plus de 50 % en poids de cendres volantes à titre de matériau de départ, une quantité prédéterminée d'eau de gâchage et un liant temporaire ajouté au matériau de départ et/ou à l'eau de gâchage sous la forme d'alcool de polyvinyle, on forme une composition,
b) ladite composition est ensuite soumise à une opération de mélange,
c) le mélange produit est alors soumis, pour la formation d'un matériau composite durcissable en l'absence de contraintes à une durée de première prise prédéterminée allant jusqu'à une heure, et
d) le mélange formé est enfin soumis, après la durée de première prise, à un nouveau processus de mélange.

2. Procédé selon la revendication 1, **caractérisé en ce que** le liant temporaire est ajouté sous forme de poudre.

3. Procédé selon la revendication 1 ou 2, **caractérisé en ce que** le liant temporaire est mélangé au matériau de départ et l'eau de gâchage est ajoutée uniquement ensuite.

4. Procédé selon l'une des revendications précédentes, **caractérisé en ce que** le liant temporaire est ajouté au matériau de départ dans une quantité qui s'élève au moins à 5 à 20 % en poids de l'eau de gâchage ajoutée plus tard.

5. Procédé selon l'une des revendications précédentes, **caractérisé en ce que** le mélange sec formé du matériau de départ et du liant temporaire est mélangé dans l'eau de gâchage.

6. Procédé selon l'une des revendications 1 à 4, **caractérisé en ce que** l'eau de gâchage est mélangée dans le mélange sec formé du matériau de départ et du liant temporaire.

7. Procédé selon l'une des revendications précédentes, **caractérisé en ce que** le l'eau de gâchage est ajoutée dans un état chauffée ou bouillante.

8. Procédé selon l'une des revendications précédentes, **caractérisé en ce que** des fibres techniques sont ajoutées au mélange sec avant l'opération de mélange avec l'eau de gâchage.

9. Procédé selon la revendication 8, **caractérisé en ce que** les fibres techniques sont ajoutées dans une quantité qui s'élève approximativement à 1 à 8 % en poids du mélange sec.

10. Procédé selon l'une des revendications précédentes, **caractérisé en ce que** l'on utilise des cendres volantes riches en calcaire à titre de cendres volantes.

11. Procédé selon l'une des revendications 1 à 9, **caractérisé en ce que** l'on utilise des cendres volantes riches en silice à titre de cendres volantes.

12. Procédé selon l'une des revendications précédentes, **caractérisé en ce que** l'on utilise à titre de ciment un ciment Portland de haute qualité de la classe de solidité minimum Cem 42,5.

13. Procédé selon l'une des revendications précédentes, **caractérisé en ce que** l'on utilise un mélange cendres volantes/ciment à particules très fines, avec une taille de particules inférieure à 0,045 mm.
